# EUROPÄISCHE PATENTSCHRIFT

(11) **EP 2 228 171 B1**
(45) Veröffentlichungstag und Bekanntmachung des Hinweises auf die Patenterteilung: **09.11.2011**
(21) Anmeldenummer: 10150811.7
(22) Anmeldetag: 15.01.2010
(51) Int. Cl.: B23Q 11/00

(54) **Handwerkzeugmaschinenvorrichtung**
Hand tool machine apparatus
Dispositif de machines-outils

(30) Priorität: 12.03.2009 DE 102009001502
(43) Veröffentlichungstag der Anmeldung: 15.09.2010
(73) Patentinhaber: Robert Bosch GmbH, 70442 Stuttgart (DE)
(72) Erfinder: Dehde, Joerg, 71144 Steinenbronn (DE)

(56) Entgegenhaltungen:
- EP-A2- 1 964 649
- DE-A1- 10 308 089
- GB-A- 2 319 600

## Beschreibung

### Stand der Technik

Die Erfindung geht aus von einer Handwerkzeugmaschinenvorrichtung nach dem Oberbegriff des Anspruchs 1, wie z.B. aus der GB-A-2 319 600 bekannt.

Es ist bereits eine Handwerkzeugmaschinenvorrichtung, insbesondere für eine Bohrmaschine, mit zumindest einer Absaugvorrichtung, einer Maschinenanschlussvorrichtung und einer die Absaugvorrichtung und die Maschinenanschlussvorrichtung koppelnden Kopplungseinheit vorgeschlagen worden.

### Offenbarung der Erfindung

Die Erfindung geht aus von einer Handwerkzeugmaschinenvorrichtung, insbesondere für eine Bohrmaschine, mit zumindest einer Absaugvorrichtung, einer Maschinenanschlussvorrichtung und einer die Absaugvorrichtung und die Maschinenanschlussvorrichtung koppelnden Kopplungseinheit.

Es wird vorgeschlagen, dass die Kopplungseinheit in wenigstens einem Bereich zweiarmig ausgeführt ist. Unter "zweiarmig" soll insbesondere verstanden werden, dass die Kopplungseinheit eine Ebene, die senkrecht zu einer Haupterstreckungsrichtung der Kopplungseinheit liegt, in genau zwei Bereichen durchbricht bzw. durchdringt. Unter einer "Haupterstreckungsrichtung" soll insbesondere eine Richtung verstanden werden, die parallel zu einer Werkzeugachse verläuft und/oder in der die Kopplungseinheit und/oder die Handwerkzeugmaschinenvorrichtung eine maximale Ausdehnung aufweist. Unter einer "Absaugvorrichtung" soll insbesondere eine Vorrichtung verstanden werden, die dazu vorgesehen ist, bei einem Bearbeitungsvorgang eines Werkstücks mittels eines Werkzeugs und/oder einer Handwerkzeugmaschine anfallenden Schmutz mittels eines Saugluftstroms aufzunehmen. Vorteilhaft wird der Saugluftstrom durch eine Werkzeugöffnung der Absaugvorrichtung in diese eingeleitet. Insbesondere soll unter einer "Maschinenanschlussvorrichtung" eine Vorrichtung verstanden werden, die dazu vorgesehen ist, die Handwerkzeugmaschinenvorrichtung mit der Handwerkzeugmaschine mechanisch und/oder wirkungsmäßig zu verbinden. Die Kopplungseinheit ist vorteilhaft mehrstückig ausgebildet. Zudem kann die Kopplungseinheit vorteilhaft zumindest teilweise einstückig mit der Absaugvorrichtung und/oder der Maschinenanschlussvorrichtung ausgebildet sein. Unter der Wendung "in wenigstens einem Bereich" soll insbesondere ein Bereich verstanden werden, der von zwei Ebenen, die senkrecht zu der Haupterstreckungsrichtung der Kopplungseinheit verlaufen, begrenzt wird. Vorteilhaft ist der Bereich zwischen der Maschinenanschlussvorrichtung und der Absaugvorrichtung angeordnet. Unter einer "Bohrmaschine" soll insbesondere eine Bohrmaschine, eine Akkubohrmaschine, eine Schlagbohrmaschine, ein Bohrhammer, ein Schlaghammer und/oder eine andere, dem Fachmann als sinnvoll erscheinende Handwerkzeugmaschine verstanden werden. Unter einer "Werkzeugachse" soll insbesondere eine Achse verstanden werden, die mittig durch eine Werkzeugöffnung der Absaugvorrichtung läuft und/oder um die ein Werkzeug in einem Arbeitsbetrieb der Handwerkzeugmaschine drehbar ist. Insbesondere soll unter einer "Werkzeugöffnung" ein Bereich der Absaugvorrichtung verstanden werden, der von der Absaugvorrichtung auf zumindest einem Umfang um zumindest 270° umschlossen wird und/oder der auf zumindest zwei Seiten nach außen offen ist, so dass ein Werkzeug den Bereich durchgreifen kann. Vorteilhaft wird der Bereich um 360° von der Absaugvorrichtung umschlossen. Die Werkzeugöffnung ist dazu vorgesehen, dass das Werkzeug bei einem Bohrvorgang durch die Absaugvorrichtung zu dem Werkstück gelangen kann. Unter "vorgesehen" soll insbesondere speziell ausgestattet und/oder ausgelegt verstanden werden. Durch die erfindungsgemäße Ausgestaltung der Handwerkzeugmaschinenvorrichtung kann ein geringes Gewicht erreicht werden. Dadurch erhöht sich ein Komfort für einen Bediener bei einer Benutzung der Handwerkzeugmaschinenvorrichtung. Des Weiteren kann die Handwerkzeugmaschinenvorrichtung durch Änderung der Abmessungen der Maschinenanschlussvorrichtung einfach an verschiedene Handwerkzeugmaschinen angepasst werden.

Gemäß der Erfindung wird vorgeschlagen, dass die Kopplungseinheit zwei Führungsarme aufweist. Unter einem "Führungsarm" soll insbesondere ein Element verstanden werden, das eine mechanische Verbindung darstellt. Vorteilhaft stellen die Führungsarme eine mechanische Verbindung zwischen der Absaugvorrichtung und der Maschinenanschlussvorrichtung dar. Ebenso vorteilhaft sind die Führungsarme voneinander beabstandet. Besonders vorteilhaft sind die Führungsarme die einzigen Verbindungen zwischen der Absaugvorrichtung und der Maschinenanschlussvorrichtung. Eine Kopplungseinheit mit lediglich zwei Führungsarmen ist besonders leicht, Bauteil sparend und wirkt auf einen Betrachter optisch ansprechend, weil sie auch den Eindruck vermittelt, besonders leicht zu sein.

Des Weiteren wird vorgeschlagen, dass Haupterstreckungsachsen der Führungsarme auf gegenüberliegenden Seiten einer Mittelebene der Kopplungseinheit angeordnet sind. Unter einer "Haupterstreckungsachse einer der Führungsarme" soll insbesondere eine Achse entlang einer Haupterstreckungsrichtung des Führungsarms verstanden werden. Vorteilhaft ist die Haupterstreckungsachse zumindest einer der Führungsarme parallel zu der Haupterstreckungsrichtung der Kopplungseinheit und/oder der Werkzeugachse angeordnet. Besonders vorteilhaft sind die Haupterstreckungsachsen der Führungsarme parallel zueinander angeordnet. Vorzugsweise verläuft die Haupterstreckungsachse durch einen Flächenmittelpunkt einer Querschnittsfläche des Führungsarms, die senkrecht zu der Haupterstreckungsrichtung des Führungsarms angeordnet ist. Unter einer "Mittelebene" soll insbesondere eine Ebene verstanden werden, in der die Werkzeugachse und zumindest ein Flächenmittelpunkt der Maschinenanschlussvorrichtung liegen. Unter einem "Flächenmittelpunkt" der Maschinenanschlussvorrichtung soll insbesondere ein Flächenmittelpunkt von Flächen der Maschinenanschlussvorrichtung verstanden werden, die dazu vorgesehen sind, eine Kraft auf die Handwerkzeugmaschine zu bewirken. Durch die auf gegenüberliegenden Seiten einer Mittelebene angeordneten Führungsarme, das heißt die außermittig angeordneten Führungsarme, kann eine Handwerkzeugmaschinenvorrichtung mit einer hohen seitlichen Stabilität bereitgestellt werden.

Gemäß der Erfindung wird vorgeschlagen, dass zumindest einer der Führungsarme dazu vorgesehen ist, einen Saugluftstrom zu leiten. Vorzugsweise leitet der Führungsarm den Saugluftstrom von der Absaugvorrichtung zu der Maschinenanschlussvorrichtung. Mittels einer Leitung des Saugluftstroms durch einen der Führungsarme können vorteilhaft zwei Funktionen von einem Bauteil übernommen werden. Dadurch kann ein Bauteil und Bauraum eingespart werden, was sich positiv auf das Gewicht und eine Optik der Handwerkzeugmaschinenvorrichtung auswirkt.

Zudem wird zumindest ein Federelement vorgeschlagen, das dazu vorgesehen ist, in zumindest einem Betriebszustand eine Längenänderung der Kopplungseinheit zu bewirken. Vorzugsweise bewirkt das Federelement eine Längenänderung entlang der Werkzeugachse. Vorteilhaft ist das Federelement in einem der Führungsarme angeordnet. Unter einem "Federelement" soll insbesondere eine Spiralfeder, eine Luftfeder und/oder ein anderes, dem Fachmann als sinnvoll erscheinendes Federelement verstanden werden. Insbesondere soll unter einem "Betriebszustand" ein Zeitraum verstanden werden, in dem eine Bewegung der Maschinenanschlussvorrichtung von einem Werkstück weg stattfindet. Unter einer "Längenänderung" soll insbesondere eine Änderung eines Abstands zwischen der Maschinenanschlussvorrichtung und der Absaugvorrichtung verstanden werden. Insbesondere soll darunter eine Vergrößerung des Abstands verstanden werden. Durch die Längenänderung der Kopplungseinheit kann eine Werkzeugöffnung gegenüber einer Bearbeitungsstelle bei einem Bearbeitungsvorgang unbewegt bleiben, wodurch eine besonders effektive Absaugung erreicht werden kann.

In einer vorteilhaften Ausbildung der Erfindung wird vorgeschlagen, dass zumindest einer der Führungsarme in zumindest einem Umfangsbereich eine von einer runden Querschnittsfläche abweichende Querschnittsfläche aufweist. Vorzugsweise weist zumindest einer der Führungsarme in wenigstens einem Bereich eine zumindest teilweise ovale Querschnittsfläche auf. Unter einer "ovalen Querschnittsfläche" soll insbesondere eine annähernd elliptische Querschnittsfläche verstanden werden. Vorteilhaft ist die Querschnittsfläche senkrecht zu den Haupterstreckungsachsen der Führungsarme angeordnet. Unter einem "Umfangsbereich" sollen vorteilhaft 25% eines Umfangs, besonders vorteilhaft 50% des Umfangs oder insbesondere besonders vorteilhaft 100% des Umfangs verstanden werden. Durch die von einer runden Querschnittsfläche abweichende Querschnittsfläche, kann eine Handwerkzeugmaschinenvorrichtung mit einer hohen Biege- und Torsionssteifigkeit der Kopplungseinheit bereitgestellt werden.

In einer weiteren Ausgestaltung wird vorgeschlagen, dass Haupterstreckungsrichtungen der Querschnittsflächen der Führungsarme V-förmig zueinander angeordnet sind. Unter einer "Haupterstreckungsrichtung der Querschnittsfläche" soll insbesondere eine Richtung entlang einer Geraden durch zwei Punkte auf der Querschnittsfläche verstanden werden, die am weitesten voneinander entfernt liegen. Vorteilhaft ist die Haupterstreckungsrichtung einer elliptischen Querschnittsfläche eine Richtung, die entlang einer größeren Halbachse der Querschnittsfläche ausgerichtet ist. Vorzugsweise liegen die Haupterstreckungsrichtungen der Querschnittsflächen auf einer gemeinsamen Ebene. Unter "V-förmig" soll insbesondere verstanden werden, dass sich die Haupterstreckungsrichtungen vorteilhaft mit einem Winkel zwischen 20° und 160° oder besonders vorteilhaft mit einem Winkel zwischen 60° und 120° schneiden. Durch die V-förmig angeordneten Führungsarme kann optisch ansprechend eine besonderes hohe Biege- und Torsionssteifigkeit der Kopplungseinheit erreicht werden.

Des Weiteren wird eine Filtervorrichtung vorgeschlagen, die dazu vorgesehen ist, einen Saugluftstrom zu filtern.

Vorteilhaft filtert die Filtervorrichtung Schmutz, wie beispielsweise Bohrstaub, Werkstückteile und/oder anderen Schmutz, der bei einem Bearbeitungsvorgang eines Werkstücks entsteht, aus dem Saugluftstrom. Dadurch kann der Schmutz vorteilhaft in der Handwerkzeugmaschinenvorrichtung gesammelt werden und eine Beaufschlagung einer den Saugluftstrom erzeugenden Vorrichtung mit dem Schmutz vermieden werden.

Ferner wird vorgeschlagen, dass die Absaugvorrichtung einen Saugluftstrom vor Erreichen der Filtervorrichtung in einer Ebene um mehr als 100° umlenkt. Vorteilhaft lenkt die Absaugvorrichtung den Saugluftstrom um mehr als 140°, besonders vorteilhaft um mehr als 180°, um. Insbesondere lenkt ein Sammelbehälter der Absaugvorrichtung den Saugluftstrom um. Unter einem "Saugluftstrom" soll insbesondere bewegte Luft verstanden werden, die dazu vorgesehen ist, den bei einem Bearbeitungsvorgang entstehenden Schmutz zu transportieren. Vorteilhaft transportiert der Saugluftstrom die Verschmutzungen von der Bearbeitungsstelle zu der Filtereinheit. Durch die Umlenkung des Saugluftstroms in einer Ebene um mehr als 100° kann erreicht werden, dass die Filtervorrichtung in einer normalen Arbeitsposition der Handwerkzeugmaschinenvorrichtung in vertikaler Richtung, das heißt entgegen der Gravitation, von dem Saugluftstrom durchdrungen wird, wodurch vorteilhaft ein Zusetzen der Filtervorrichtung vermieden wird.

Ferner wird vorgeschlagen, dass die Absaugvorrichtung einen Saugkopf und einen von dem Saugkopf trennbaren Sammelbehälter aufweist. Unter einem "Saugkopf soll insbesondere ein Element verstanden werden, das dazu vorgesehen ist, den Saugluftstrom aus einem Freiraum in die Handwerkzeugmaschinenvorrichtung einzuleiten. Das heißt, dass der Saugluftstrom von dem Saugkopf bis zu der Maschinenanschlussvorrichtung an jeder Stelle zumindest auf vier Seiten begrenzt ist. Vorteilhaft liegt bei einem Bearbeitungsvorgang zumindest ein Bereich des Saugkopfs an ein Werkzeug und/oder an ein Werkstück an. Unter einem "Sammelbehälter" soll insbesondere eine Vorrichtung verstanden werden, die dazu vorgesehen ist, den ausgefilterten Schmutz bis zu einer Entsorgung zu sammeln. Unter dem Begriff "trennbaren" soll insbesondere werkzeuglos abnehmbar verstanden werden. Vorteilhaft sind der Sammelbehälter und die Werkzeugöffnungen einarmig miteinander verbunden, wodurch eine Sicht des Bedieners auf das Werkstück behinderungsfrei erreicht werden kann. Durch den von dem Saugkopf trennbaren Sammelbehälter kann der Sammelbehälter besonders komfortabel geleert werden und ein Volumen eines Raums für ausgefilterten Schmutz einfach durch ein Austauschen des preiswerten Sammelbehälters verändert werden.

Zudem wird vorgeschlagen, dass die Maschinenanschlussvorrichtung eine Saugluftöffnung aufweist, mittels der die Maschinenanschlussvorrichtung in zumindest einem Betriebszustand einen Saugluftstrom an eine Handwerkzeugmaschine weiterleitet. Unter einer "Saugluftöffnung" soll insbesondere eine Öffnung verstanden werden, aus der der Saugluftstrom aus der Maschinenanschlussvorrichtung bzw. der Handwerkzeugmaschinenvorrichtung austritt. Unter "weiterzuleiten" soll in diesem Zusammenhang insbesondere verstanden werden, dass der Saugluftstrom aus der Maschinenanschlussvorrichtung austritt und größtenteils in die Handwerkzeugmaschine eintritt. Durch die Saugluftöffnung kann vorteilhaft die Handwerkzeugmaschine als Vorrichtung verwendet werden, die den Saugluftstrom erzeugt. So kann auf eine separate Vorrichtung zur Erzeugung des Saugluftstroms, wie beispielsweise einen Staubsauger, verzichtet werden.

In einer vorteilhaften Ausbildung der Erfindung wird vorgeschlagen, dass die Maschinenanschlussvorrichtung zumindest eine Formschlussfläche mit zumindest einer Hauptformschlusskante aufweist, deren Erstreckungsrichtung in zumindest einem Bereich von einer Einschubrichtung der Maschinenanschlussvorrichtung abweicht. Unter einer "Formschlussfläche" soll insbesondere eine Fläche verstanden werden, die aufgrund ihrer Geometrie dazu vorgesehen ist, einen Formschluss und/oder eine andere, dem Fachmann als sinnvoll erscheinende Verbindung zwischen der Maschinenanschlussvorrichtung und der Handwerkzeugmaschine zu bewirken. Unter einer "Hauptformschlusskante" soll insbesondere eine Kante verstanden werden, bei der beide angrenzenden Flächen zumindest teilweise einen Kontakt zu der Handwerkzeugmaschine haben, wenn die Handwerkzeugmaschine und die Maschinenanschlussvorrichtung verbunden sind. Unter dem Begriff "Erstreckungsrichtung" soll insbesondere eine Richtung verstanden werden, in die die Hauptformschlusskante verläuft. Insbesondere soll unter einer "Einschubrichtung" eine Richtung verstanden werden, in die die Handwerkzeugmaschine gegenüber der Maschinenanschlussvorrichtung bewegt werden muss, damit ein Formschluss zwischen der Handwerkzeugmaschine und der Maschinenanschlussvorrichtung entsteht. Dadurch, dass die Erstreckungsrichtung der Hauptformschlusskante von der Einschubrichtung abweicht, kann ein Einschubweg vorteilhaft klein sein, ohne dass eine Stabilität der Maschinenanschlussvorrichtung dadurch gering ist. Zudem können Anforderungen an die Fertigungsgenauigkeit reduziert werden.

In einer weiteren Ausgestaltung wird vorgeschlagen, dass die Maschinenanschlussvorrichtung zumindest eine Formschlussfläche mit einer zumindest teilweise bogenförmigen Hauptformschlusskante aufweist. Unter der Wendung "zumindest teilweise bogenförmig" soll insbesondere verstanden werden, dass die Hauptformschlusskante in verschiedenen Bereichen entlang einer Ebene unterschiedlich ausgerichtet sein kann. Vorteilhaft ist die Hauptformschlusskante dabei knickstellenfrei. Besonders vorteilhaft ist die Hauptformschlusskante hufeisenförmig ausgebildet. Durch die bogenförmige Hauptformschlusskante kann vorteilhaft eine große wirksame Formschlussfläche mit einem besonders kurzen Einschubweg erreicht werden.

Des Weiteren wird vorgeschlagen, dass die Maschinenanschlussvorrichtung ein Verriegelungselement aufweist, das dazu vorgesehen ist, in zumindest zwei

Richtungen eine Kraft zu bewirken. Unter einem "Verriegelungselement" soll insbesondere ein Element verstanden werden, das dazu vorgesehen ist, in zumindest einem Betriebszustand eine Bewegung einer Handwerkzeugmaschine gegenüber der Maschinenanschlussvorrichtung in Einschubrichtung zu verhindern. Unter der Wendung "in zumindest zwei Richtungen" soll insbesondere verstanden werden, dass das Verriegelungselement dazu vorgesehen ist, neben einer Kraft in Einschubrichtung eine Kraft in eine weitere Richtung zu bewirken. Vorzugsweise ist diese weitere Richtung senkrecht zu der Kraft in Einschubrichtung ausgerichtet und/oder auf die Handwerkzeugmaschine zugewandt oder von der Handwerkzeugmaschine abgewandt. Vorteilhaft ist das Verriegelungselement dazu vorgesehen, von einer der Maschinenanschlussvorrichtung abgewandten Seite bedienbar zu sein. Insbesondere ist das Verriegelungselement von dem Bediener bedienbar. Durch das Verriegelungselement kann ein vollständiger Formschluss zwischen Maschinenanschlussvorrichtung und Handwerkzeugmaschine auf einer großen Fläche erreicht werden und dadurch eine besonders hohe Stabilität der Verbindung erreicht werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Handwerkzeugmaschinenvorrichtung mit einer angeschlossenen Handwerkzeugmaschine,
- Fig. 2: die Handwerkzeugmaschinenvorrichtung aus Figur 1 in einer perspektivischen Ansicht und
- Fig. 3: die Handwerkzeugmaschinenvorrichtung aus Figur 1 in einer Explosionszeichnung.

### Beschreibung des Ausführungsbeispiels

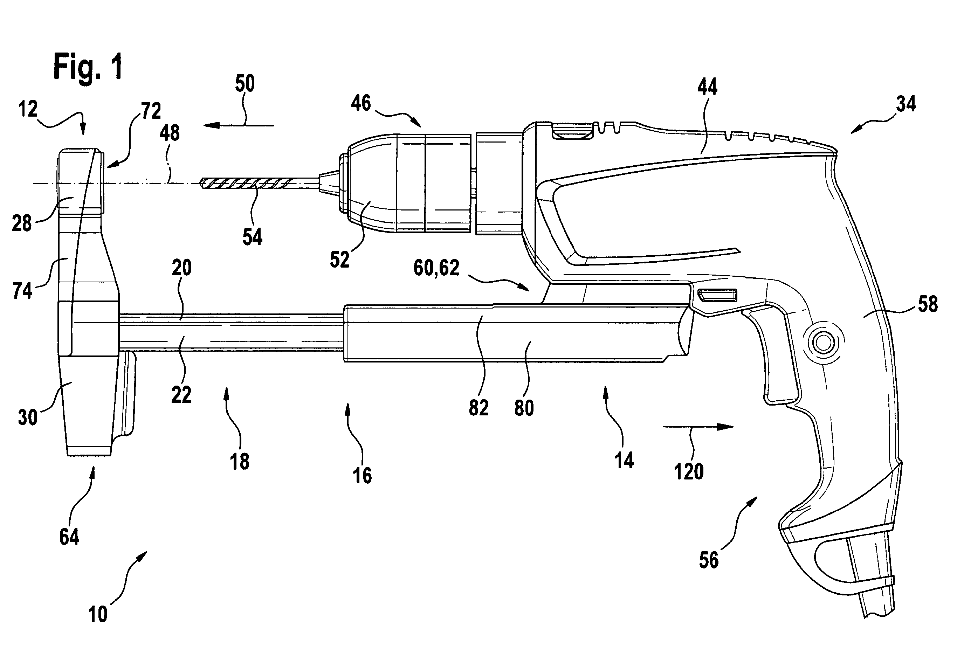

In Figur 1 ist eine Handwerkzeugmaschinenvorrichtung 10 für eine Bohrmaschine gezeigt. Die Handwerkzeugmaschinenvorrichtung 10 ist an eine als Schlagbohrmaschine ausgebildete Handwerkzeugmaschine 34 angeschlossen. Die Handwerkzeugmaschinenvorrichtung 10 weist eine Absaugvorrichtung 12, eine Maschinenanschlussvorrichtung 14 und eine Kopplungseinheit 16 auf. Die Kopplungseinheit 16 koppelt die Absaugvorrichtung 12 und die Maschinenanschlussvorrichtung 14.

Die Handwerkzeugmaschine 34 weist ein pistolenförmiges Gehäuse 44 auf. Ein oberer, zylinderähnlicher Bereich 46 erstreckt sich entlang einer Werkzeugachse 48, die durch die Absaugvorrichtung 12 vorgegeben ist. An einer vorderen Seite des oberen Bereichs 46, das heißt in einer in Hauptarbeitsrichtung 50 der Handwerkzeugmaschine 34 gelegenen Seite des oberen Bereichs 46, weist die Handwerkzeugmaschine 34 einen Werkzeughalter 52 auf. Der Werkzeughalter 52 ist als Werkzeugfutter ausgebildet. In dem Werkzeughalter 52 ist das als Bohrer ausgebildete Werkzeug 54 befestigt, das sich bei einem Betrieb der Handwerkzeugmaschine 34 um die Werkzeugachse 48 dreht. An den oberen Bereich 46 schließt sich in einem unteren Bereich 56 auf einer von dem Werkzeughalter 52 abgewandten Seite ein Handgriff 58 an. An einer Unterseite 60 des oberen Bereichs 46 weist die Handwerkzeugmaschine 34 eine Anschlussvorrichtung 62 auf, an die die Maschinenanschlussvorrichtung 14 der Handwerkzeugmaschinenvorrichtung 10 anschließbar ist. Hier ist die Handwerkzeugmaschine 34 an die Maschinenanschlussvorrichtung 14 angeschlossen.

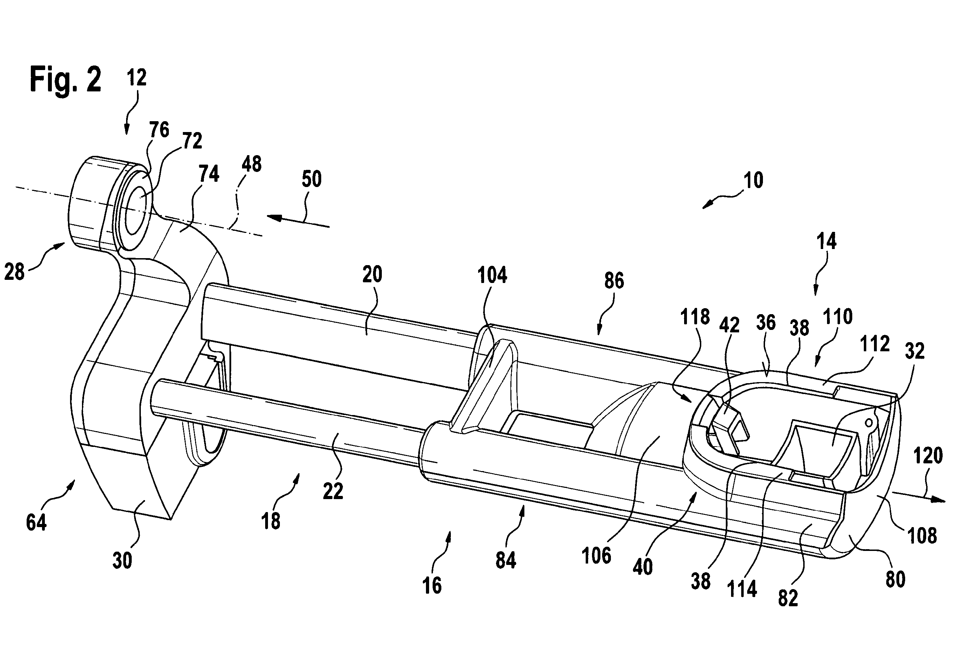

Figur 2 zeigt die Handwerkzeugmaschinenvorrichtung 10 in einer perspektivischen Ansicht. In einem vorderen Bereich 64 der Handwerkzeugmaschinenvorrichtung 10, das heißt in einem Bereich, der der Maschinenanschlussvorrichtung 14 abgewandt ist, ist die Absaugvorrichtung 12 angeordnet. In Hauptarbeitsrichtung 50 gesehen vor der Absaugvorrichtung 12 bzw. zwischen der Absaugvorrichtung 12 und der Maschinenanschlussvorrichtung 14 ist die Kopplungseinheit 16 angeordnet. Die Kopplungseinheit 16 ist in einem mittleren Bereich 18 zweiarmig ausgeführt. Dort weist die Kopplungseinheit 16 zwei Führungsarme 20, 22 auf. Die Haupterstreckungsachsen der Führungsarme 20, 22 liegen parallel zu der Werkzeugachse 48 und sind auf gegenüberliegenden Seiten einer nicht näher dargestellten, imaginären, vertikalen Mittelebene angeordnet. Die Mittelebene steht senkrecht zu einer horizontalen Ebene, auf der die beiden Haupterstreckungsachsen der Führungsarme 20, 22 liegen. Die Werkzeugachse 48 liegt in der Mittelebene.

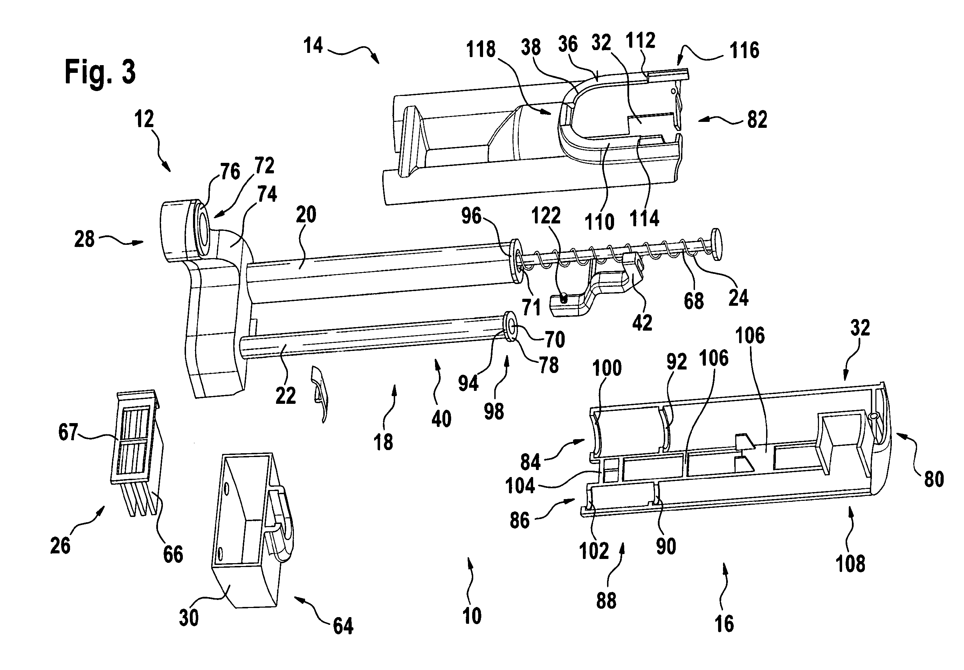

Wie in Figur 3 dargestellt ist, weisen die Führungsarme 20, 22 innen jeweils einen Hohlraum 70, 71 auf, bzw. sind hohl ausgebildet. Ferner weist die Handwerkzeugmaschinenvorrichtung 10 zumindest ein Federelement 24 auf, das als Spiralfeder ausgebildet ist. Das Federelement 24 ist teilweise innerhalb eines Hohlraums 71 eines ersten der beiden Führungsarme 20 angeordnet.

Bei einem Bohrvorgang drückt ein nicht näher dargestellter Bediener die Handwerkzeugmaschinenvorrichtung 10 mittels der Handwerkzeugmaschine 34 gegen ein nicht näher dargestelltes Werkstück. Die Kopplungseinheit 16 wird entgegen einer Federkraft des Federelements 24 teleskopartig zusammengeschoben, indem die beiden Führungsarme 20, 22 in einen hinteren Bereich der Kopplungseinheit 16 hineingeschoben werden. An dem hinteren Bereich ist auch die Maschinenanschlussvorrichtung 14 angeordnet. Dadurch verkürzt sich eine Länge der Kopplungseinheit 16 und das Werkzeug 54 bewegt sich auf die Absaugvorrichtung 12 bzw. auf das Werkstück zu. Das Federelement 24 ist dazu vorgesehen, nach einem Bohrvorgang eine Längenänderung der Kopplungseinheit 16 zu bewirken, indem das Federelement 24 die Kopplungseinheit 16 wieder auseinander drückt.

Die Handwerkzeugmaschinenvorrichtung 10 weist ein Federführungselement 68 auf, das das Federelement 24 bei einer Längenänderung bzw. wenn das Federelement 24 eine Kraft ausübt, ausrichtet. Das Federführungselement 68 ist als Stab ausgebildet und durchdringt das Federelement 24 und damit einen der Führungsarme 20 entlang der Haupterstreckungsachse des Führungsarms 20. Das Federführungselement 68 ist somit wie das Federelement 24 teilweise in dem Hohlraum 71 angeordnet. Das Federführungselement 68 weist an einer der Maschinenanschlussvorrichtung 14 zugewandten Seite einen Anschlag auf, der das Federelement 24 abstützt und das Federführungselement 68 an der Maschinenanschlussvorrichtung 14 befestigt. Auf einer der Maschinenanschlussvorrichtung 14 abgewandter Seite stützt ein nicht näher dargestellter Verschluss des Führungsarms 20 das Federelement 24 ab.

Der zweite Führungsarm 22 ist dazu vorgesehen, einen Saugluftstrom zu leiten. Dazu weist der zweite Führungsarm 22 den Hohlraum 70 auf, durch den der zweite Führungsarm 22 den Saugluftstrom leitet. Der Hohlraum 70 ist mit der Absaugvorrichtung 12 und der Maschinenanschlussvorrichtung 14 verbunden.

Beide Führungsarme 20, 22 weisen in dem mittleren Bereich 18 eine elliptische Querschnittsfläche, das heißt eine von einer runden Querschnittsfläche abweichende Querschnittsfläche auf. Dabei sind die Haupterstreckungsrichtungen der Querschnittsflächen der Führungsarme 20, 22 V-förmig zueinander angeordnet. Eine imaginäre Spitze der V-Form liegt dabei auf einer der Werkzeugachse 48 abgewandter Seite der Führungsarme 20, 22.

Die Absaugvorrichtung 12 weist eine Filtervorrichtung 26, einen Saugkopf 28 und einen vom Saugkopf 28 trennbaren Sammelbehälter 30 auf. Der Saugkopf 28 erstreckt sich ringförmig um die Werkzeugachse 48. Dabei umschließt der Saugkopf 28 eine zylindrische Werkzeugöffnung 72, durch den das Werkzeug 54 bei einem Bohrvorgang zu dem Werkstück gelangt. Die Werkzeugachse 48 durchdringt die Werkzeugöffnung 72 mittig und parallel zur Hauptarbeitsrichtung 50. Eine Innenseite des Saugkopfs 28 weist eine nicht näher dargestellte ringförmige Öffnung auf. Der Saugkopf 28 bzw. die ringförmige Öffnung sind über einen einzigen hohlen Arm 74 der Absaugvorrichtung 12 mit dem Sammelbehälter 30 und der Filtervorrichtung 26 während eines Betriebs mechanisch bzw. wirkungsmäßig verbunden. Auf einer der Maschinenanschlussvorrichtung 14 abgewandten Seite des Saugkopfs 28 bildet sich, wenn das Werkzeug 54 innerhalb des Saugkopfs 28 angeordnet ist, zwischen dem Werkzeug 54 und dieser Seite des Saugkopfs 28 einen nicht näher dargestellten Ringspalt. Auf einer dem Werkzeughalter 52 zugewandten Seite des Saugkopfs 28 bildet sich dann ebenfalls ein Ringspalt, der durch eine flexible Abdeckung 76 des Saugkopfs 28 verschließbar ist. Die flexible Abdeckung 76 passt sich in einem Betrieb an eine Größe des Werkzeugs 54 an.

Bei einem Betrieb saugt die Handwerkzeugmaschinenvorrichtung 10 mittels der Handwerkzeugmaschine 34 durch den dem Werkzeughalter 52 abgewandten Ringspalt den Saugluftstrom an. Der Saugluftstrom transportiert dabei einen bei dem Arbeitsvorgang anfallenden Schmutz durch den Ringspalt in die zylindrische Werkzeugöffnung 72 bzw. in den Saugkopf 28. Von dort aus transportiert der Saugluftstrom den Schmutz durch den hohlen Arm 74 der Absaugvorrichtung 12 in den Sammelbehälter 30. Der Führungsarm 20, der auf der Seite des hohlen Arms 74 angeordnet ist, ist direkt an der Absaugvorrichtung 12 mittels des nicht näher dargestellten Verschlusses verschlossen. Die Absaugvorrichtung 12 weist eine nicht näher dargestellte vertikale Trennwand auf, die einen Einleitkanal des Luftstroms von einem Ausleitkanal des Luftstroms trennt. Der Einleitkanal leitet den Saugluftstrom in den Sammelbehälter 30 ein. Der Ausleitkanal leitet den Saugluftstrom durch die in ihm angeordnete Filtervorrichtung 26 aus dem Sammelbehälter 30 aus. Dazu ist die Filtervorrichtung 26 in einer horizontalen Richtung senkrecht zu den Haupterstreckungsachsen der Führungsarme 20, 22 schmaler als der Sammelbehälter 30 ausgeführt. In dem Sammelbehälter 30 wird der Saugluftstrom vor Erreichen der Filtervorrichtung 26 in einer Ebene um etwas mehr als 180° umgelenkt. Dadurch durchdringt der Saugluftstrom die Filtervorrichtung 26 von unten in einer Richtung, die auf die Saugluftöffnung, bzw. den Saugkopf 28 hin gerichtet ist. Die Filtervorrichtung 26 filtert den Schmutz aus dem Saugluftstrom. Die Filtervorrichtung 26 wird von einem Lamellenfilter 66 mit einer Filterhalterung 67 gebildet. Der Schmutz verbleibt in dem Sammelbehälter 30. Der Saugluftstrom strömt weiter durch den Hohlraum 70 in einen der Führungsarme 22 und durch eine Stirnseite 78 des Führungsarms 22 zu der Maschinenanschlussvorrichtung 14.

Die Maschinenanschlussvorrichtung 14 weist ein unteres Schalenelement 80 und ein oberes Schalenelement 82 auf. Somit ist die Maschinenanschlussvorrichtung 14 in etwa parallel zu einer horizontalen Ebene, auf der die beiden Haupterstreckungsachsen der Führungsarme 20, 22 liegen, teilbar. Die beiden Schalenelemente 80, 82 sind in einem montierten Zustand mit nicht näher dargestellten Schrauben verschraubt. Das untere und das obere Schalenelement 80, 82 weisen jeweils zwei Kopplungsbereiche 84, 86 auf. In den Kopplungsbereichen 84, 86 ist die Maschinenanschlussvorrichtung 14 einstückig mit der Kopplungseinheit 16 ausgebildet. Sind die beiden Schalenelemente 80, 82 verbunden, begrenzen die Kopplungsbereiche 84, 86 der Schalenelemente 80, 82 einen Hohlraum, dessen Innenquerschnittsfläche die Form der Querschnittsfläche der Führungsarme 20, 22 aufweist. Allerdings sind die Innenquerschnittsflächen der Kopplungsbereiche 84, 86 geringfügig größer als die Querschnittsflächen der Führungsarme 20, 22. Das Federelement 24 ist teilweise innerhalb von einem der Kopplungsbereiche 84 angeordnet.

In einem, einem vorderen Ende 88 zugewandten Bereich der Kopplungsbereiche 84, 86 weisen die Kopplungsbereiche 84, 86 Erhebungen 90, 92 auf, die sich radial nach innen in den von den Kopplungsbereichen 84, 86 begrenzten Hohlraum hinein erstrecken. Die Erhebungen 90, 92 verhindern, dass die Führungsarme 20, 22, beispielsweise durch das Federelement 24, aus den Kopplungsbereichen 84, 86 hinaus in Richtung der Absaugvorrichtung 12 bewegbar sind. Dazu weisen die Führungsarme 20, 22 ebenfalls Erhebungen 94, 96 auf. Diese sind an einem der Absaugvorrichtung 12 abgewandten Ende 98 der Führungsarme 20, 22 angeordnet und erstrecken sich von der Haupterstreckungsachse der Führungsarme 20, 22 radial nach außen weg. Die Erhebungen 94, 96 der Führungsarme 20, 22 sind an Innenseiten der Kopplungsbereiche 84, 86 geführt. Die Erhebungen 90, 92 der Kopplungsbereiche 84, 86 sind so weit von dem vorderen Ende 88 beabstandet, dass immer ein Viertel der Länge der Führungsarme 20, 22 in den Kopplungsbereichen 84, 86 angeordnet ist. Es ist auch ein anderer, dem Fachmann als sinnvoll erscheinender Abstand möglich. Wenn das Federelement 24 eine Längenänderung zu einer maximalen Länge bewirkt hat, berühren sich die Erhebungen 90, 92 der Kopplungsbereiche 84, 86 und die Erhebungen 94, 96 der Führungsarme 20, 22 an jeweils einer Seitenfläche der Erhebungen 90, 92, 94, 96. Dabei sind die Seitenflächen der Erhebungen 94, 96 der Führungsarme 20, 22 der Absaugvorrichtung 12 zugewandt und die Seitenflächen der Erhebungen 90, 92 der Kopplungsbereiche 84 die der Maschinenanschlussvorrichtung 14 zugewandt. Die Kopplungsbereiche 84, 86 weisen unmittelbar an einem vorderen Ende 88 ebenfalls Erhebungen 100, 102 auf, die dazu vorgesehen sind, die Außenflächen der Führungsarme 20, 22 zu berühren. Die unmittelbar an dem vorderen Ende 88 der Kopplungsbereiche 84, 86 angeordneten Erhebungen 100, 102 und die Erhebungen 94, 96 der Führungsarme 20, 22 führen die Führungsarme 20, 22 in den Kopplungsbereichen 84, 86 bzw. in der Maschinenanschlussvorrichtung 14 an ihren Umfängen. Die Umfänge sind dabei parallel zu der Haupterstreckungsachse der Führungsarme 20, 22 angeordnet. Sind die beiden Schalenelemente 80, 82 miteinander verbunden, umlaufen bzw. umgeben alle Erhebungen 90, 92, 94, 96, 100, 102 die Haupterstreckungsachse der Führungsarme 20, 22 um 360° bzw. ringförmig. Des Weiteren sind die Erhebungen 90, 92, 94, 96, 100, 102 dazu vorgesehen, die Kopplungseinheit 16 während eines Betriebs gegen in die Kopplungseinheit 16 eindringende Luft abzudichten.

Die Maschinenanschlussvorrichtung 14 weist drei, nämlich ein vorderes, ein mittleres und ein hinteres Brückenelement 104, 106, 108 auf, die die beiden Kopplungsbereiche 84, 86 verbinden. Dabei liegt das vordere Brückenelement 104 auf einer der Absaugvorrichtung 12 zugewandten Seite der Maschinenanschlussvorrichtung 14. Die Brückenelemente 104, 106, 108 werden von Stegen gebildet. Diese Stege werden von dem unteren und von dem oberen Schalenelement 80, 82 gemeinsam gebildet.

Die Maschinenanschlussvorrichtung 14 weist eine Saugluftöffnung 32 auf. Die Saugluftöffnung 32 ist an dem hinteren Brückenelement 108 der Maschinenanschlussvorrichtung 14 angeordnet. Die Saugluftöffnung 32 ist über den Hohlraum des Kopplungsbereichs 84 mit der Stirnseite 78 des ersten Führungsarms 22 verbunden. In einem Betrieb leitet die Saugluftöffnung 32 den Saugluftstrom an die Handwerkzeugmaschine 34 weiter. In der Handwerkzeugmaschine 34 wird der Saugluftstrom von einem nicht näher dargestellten Lüfter der Handwerkzeugmaschine 34 erzeugt. Der Lüfter wird von einem nicht näher dargestellten Motor der Handwerkzeugmaschine 34 angetrieben.

Die Maschinenanschlussvorrichtung 14 weist ein Formschlusselement 110 mit einer Formschlussfläche 36 auf. Das Formschlusselement 110 erstreckt sich von Punkten 112, 114, die oberhalb von einem hinteren Ende 116 der Kopplungsbereiche 84, 86 angeordnet sind, hufeisenförmig bzw. U-förmig über das mittlere Brückenelement 106. Dort weist das Formschlusselement 110 einen Freibereich 118 für ein Verriegelungselement 42 auf. Die Formschlussfläche 36 weist eine Hauptformschlusskante 38 auf, deren Erstreckungsrichtung in einem bogenförmigen Bereich 40 von einer Einschubrichtung 120 der Maschinenanschlussvorrichtung 14 abweicht.

Ferner weist die Maschinenanschlussvorrichtung 14 das Verriegelungselement 42 auf. Das Verriegelungselement 42 ist in dem mittleren Brückenelement 106 angeordnet und um eine Achse von einem Federelement 122 oder einem Bediener schwenkbar. Diese Achse ist senkrecht zu der Mittelebene ausgerichtet. Das Verriegelungselement 42 bewirkt eine Kraft auf die Handwerkzeugmaschine 34 in Richtung der Absaugvorrichtung 12 parallel zu der Werkzeugachse 48. Des Weiteren bewirkt das Verriegelungselement 42 eine Kraft auf die Handwerkzeugmaschine 34 je nach Belastung bei einem Arbeitsvorgang auf die Handwerkzeugmaschine 34 zu oder von der Handwerkzeugmaschine 34 weg.

In einem gekoppelten Zustand bilden die Handwerkzeugmaschinenvorrichtung 10 und die Handwerkzeugmaschine 34 ein in Figur 1 gezeigtes System.

## Patentansprüche

1. Handwerkzeugmaschinenvorrichtung, insbesondere für eine Bohrmaschine, mit zumindest einer Absaugvorrichtung (12), einer Maschinenanschlussvorrichtung (14) und einer die Absaugvorrichtung (12) und die Maschinenanschlussvorrichtung (14) koppelnde Kopplungseinheit (16), wobei die Kopplungseinheit (16) in wenigstens einem Bereich (18) zweiarmig ausgeführt ist und zwei Führungsarme (20, 22) aufweist, **dadurch gekennzeichnet, dass** zumindest einer der Führungsarme (22) dazu vorgesehen ist, einen Saugluftstrom zu leiten.

2. Handwerkzeugmaschinenvorrichtung nach Anspruch 1, **dadurch gekennzeichnet, dass** Haupterstreckungsachsen der Führungsarme (20, 22) auf gegenüberliegenden Seiten einer Mittelebene der Kopplungseinheit (16) angeordnet sind.

3. Handwerkzeugmaschinenvorrichtung nach einem der vorhergehenden Ansprüche, **gekennzeichnet durch** zumindest ein Federelement (24), das dazu vorgesehen ist, in zumindest einem Betriebszustand eine Längenänderung der Kopplungseinheit (16) zu bewirken.

4. Handwerkzeugmaschinenvorrichtung nach einem der vorhergehenden Ansprüche, **dadurch gekennzeichnet, dass** zumindest einer der Führungsarme (20, 22) in zumindest einem Umfangsbereich eine von einer runden Querschnittsfläche abweichende Querschnittsfläche aufweist.

5. Handwerkzeugmaschinenvorrichtung nach Anspruch 4, **dadurch gekennzeichnet, dass** Haupterstreckungsrichtungen der Querschnittsflächen der Führungsarme (20, 22) V-förmig zueinander angeordnet sind.

6. Handwerkzeugmaschinenvorrichtung nach einem der vorhergehenden Ansprüche, **gekennzeichnet durch** eine Filtervorrichtung (26), die dazu vorgesehen ist, einen Saugluftstrom zu filtern.

7. Handwerkzeugmaschinenvorrichtung nach Anspruch 6, **dadurch gekennzeichnet, dass** die Absaugvorrichtung (12) einen Saugluftstrom vor Erreichen der Filtervorrichtung (26) in einer Ebene um mehr als 100° umlenkt.

8. Handwerkzeugmaschinenvorrichtung nach einem der vorhergehenden Ansprüche, **dadurch gekennzeichnet, dass** die Absaugvorrichtung (12) einen Saugkopf (28) und einen von dem Saugkopf (28) trennbaren Sammelbehälter (30) aufweist.

9. Handwerkzeugmaschinenvorrichtung nach einem der vorhergehenden Ansprüche, **dadurch gekennzeichnet, dass** die Maschinenanschlussvorrichtung (14) eine Saugluftöffnung (32) aufweist, mittels der die Maschinenanschlussvorrichtung (14) in zumindest einem Betriebszustand einen Saugluftstrom an eine Handwerkzeugmaschine (34) weiterleitet.

10. Handwerkzeugmaschinenvorrichtung nach einem der vorhergehenden Ansprüche, **dadurch gekennzeichnet, dass** die Maschinenanschlussvorrichtung (14) zumindest eine Formschlussfläche (36) mit zumindest einer Hauptformschlusskante (38) aufweist, deren Erstreckungsrichtung in zumindest einem Bereich (40) von einer Einschubrichtung der Maschinenanschlussvorrichtung (14) abweicht.

11. Handwerkzeugmaschinenvorrichtung nach einem der vorhergehenden Ansprüche, **dadurch gekennzeichnet, dass** die Maschinenanschlussvorrichtung (14) zumindest eine Formschlussfläche (36) mit einer zumindest teilweise bogenförmigen Hauptformschlusskante (38) aufweist.

12. Handwerkzeugmaschinenvorrichtung nach einem der vorhergehenden Ansprüche, **dadurch gekennzeichnet, dass** die Maschinenanschlussvorrichtung (14) ein Verriegelungselement (42) aufweist, das dazu vorgesehen ist, in zumindest zwei Richtungen eine Kraft zu bewirken.

13. System mit einer Handwerkzeugmaschinenvorrichtung (10) nach einem der vorhergehenden Ansprüche und einer Handwerkzeugmaschine (34)

## Claims

1. Portable power tool device, in particular for a drilling machine, comprising at least one extraction device (12), a machine connection device (14) and a coupling unit (16) coupling the extraction device (12) and the machine connection device (14), wherein the coupling unit (16) is of two-armed design in at least one region (18) and has two guide arms (20, 22), **characterized in that** at least one of the guide arms (22) is provided for directing a suction air flow.

2. Portable power tool device according to Claim 1, **characterized in that** main extension axes of the guide arms (20, 22) are arranged on opposite sides of a centre plane of the coupling unit (16).

3. Portable power tool device according to either of the preceding claims, **characterized by** at least one spring element (24) which is provided for producing a change in length of the coupling unit (16) in at least one operating state.

4. Portable power tool device according to one of the preceding claims, **characterized in that** at least one of the guide arms (20, 22) has in at least one circumferential region a cross-sectional area differing from a round cross-sectional area.

5. Portable power tool device according to Claim 4, **characterized in that** the main extension directions of the cross-sectional areas of the guide arms (20, 22) are arranged in a V-shape relative to one another.

6. Portable power tool device according to one of the preceding claims, **characterized by** a filter device (26) which is provided for filtering a suction air flow.

7. Portable power tool device according to Claim 6, **characterized in that** the extraction device (12) deflects a suction air flow in a plane by more than 100° before reaching the filter device (26).

8. Portable power tool device according to one of the preceding claims, **characterized in that** the extraction device (12) has a suction head (28) and a collecting container (30) which can be separated from the suction head (28).

9. Portable power tool device according to one of the preceding claims, **characterized in that** the machine connection device (14) has a suction air opening (32), by means of which the machine connection device (14) transmits a suction air flow to a portable power tool (34) in at least one operating state.

10. Portable power tool device according to one of the preceding claims, **characterized in that** the machine connection device (14) has at least one positive-locking surface (36) with at least one main positive-locking edge (38), the extension direction of which deviates in at least one region (40) from a push-in direction of the machine connection device (14).

11. Portable power tool device according to one of the preceding claims, **characterized in that** the machine connection device (14) has at least one positive-locking surface (36) with an at least partly curved main positive-locking edge (38).

12. Portable power tool device according to one of the preceding claims, **characterized in that** the machine connection device (14) has a locking element (42) which is provided for producing a force in at least two directions.

13. System comprising a portable power tool device (10) according to one of the preceding claims and a portable power tool (34).

## Revendications

1. Dispositif de machine-outil à main, notamment pour une perceuse, comprenant au moins un dispositif d'aspiration (12), un dispositif de raccordement de machine (14) et une unité d'accouplement (16) accouplant le dispositif d'aspiration (12) et le dispositif de raccordement de machine (14), l'unité d'accouplement (16) étant réalisée dans au moins une région (18) avec deux bras et présentant deux bras de guidage (20, 22), **caractérisé en ce qu'**au moins l'un des bras de guidage (22) est prévu pour guider un flux d'air d'aspiration.

2. Dispositif de machine-outil à main selon la revendication 1, **caractérisé en ce que** des axes d'étendue principaux des bras de guidage (20, 22) sont disposés sur des côtés opposés d'un plan médian de l'unité d'accouplement (16).

3. Dispositif de machine-outil à main selon l'une quelconque des revendications précédentes, **caractérisé par** au moins un élément de ressort (24) qui est prévu pour provoquer dans au moins un état de fonctionnement, une variation de longueur de l'unité d'accouplement (16).

4. Dispositif de machine-outil selon l'une quelconque des revendications précédentes, **caractérisé en ce qu'**au moins l'un des bras de guidage (20, 22) présente, dans au moins une région périphérique, une surface en section transversale s'écartant d'une surface de section transversale circulaire.

5. Dispositif de machine-outil à main selon la revendication 4, **caractérisé en ce que** les directions d'étendue principales des surfaces en section transversale des bras de guidage (20, 22) sont disposées en forme de V l'une par rapport à l'autre.

6. Dispositif de machine-outil à main selon l'une quelconque des revendications précédentes, **caractérisé par** un dispositif de filtre (26) qui sert à filtrer un flux d'air d'aspiration.

7. Dispositif de machine-outil à main selon la revendication 6, **caractérisé en ce que** le dispositif d'aspiration (12) dévie un flux d'air d'aspiration dans un plan de plus de 100° avant d'atteindre le dispositif de filtre (26).

8. Dispositif de machine-outil à main selon l'une quelconque des revendications précédentes, **caractérisé en ce que** le dispositif d'aspiration (12) présente une tête d'aspiration (28) et un récipient collecteur (30) pouvant être séparé de la tête d'aspiration (28).

9. Dispositif de machine-outil à main selon l'une quelconque des revendications précédentes, **caractérisé en ce que** le dispositif de raccordement de machine (14) présente une ouverture d'air d'aspiration (32) au moyen de laquelle le dispositif de raccordement de machine (14) transmet dans au moins un état de fonctionnement un flux d'air d'aspiration à une machine-outil à main (34).

10. Dispositif de machine-outil à main selon l'une quelconque des revendications précédentes, **caractérisé en ce que** le dispositif de raccordement de machine (14) présente au moins une surface d'engagement par coopération de forme (36) avec au moins une arête d'engagement par coopération de forme principale (38), dont la direction d'étendue dans au moins une région (40) s'écarte d'une direction d'enfoncement du dispositif de raccordement de machine (14).

11. Dispositif de machine-outil à main selon l'une quelconque des revendications précédentes, **caractérisé en ce que** le dispositif de raccordement de machine (14) présente au moins une surface d'engagement par coopération de forme (36) avec une arête d'engagement par coopération de forme principale (38) au moins partiellement de forme courbe.

12. Dispositif de machine-outil à main selon l'une quelconque des revendications précédentes, **caractérisé en ce que** le dispositif de raccordement de machine (14) présente un élément de verrouillage (42) qui est prévu pour générer une force dans au moins deux directions.

13. Système comprenant un dispositif de machine-outil à main (10) selon l'une quelconque des revendications précédentes, et une machine-outil à main (34).
